# EUROPÄISCHE PATENTANMELDUNG

(11) **EP 0 582 877 A2**
(43) Veröffentlichungstag der Anmeldung: **16.02.1994**
(21) Anmeldenummer: 93111805.3
(22) Anmeldetag: 23.07.1993
(51) Int. Cl.: H04Q 11/04, H04M 11/06, H04L 12/12

(54) **Verfahren und Vorrichtung zum schnellen Datenaustausch**

(30) Priorität: 08.08.1992 DE 4226332
(71) Anmelder: Alcatel SEL Aktiengesellschaft, D-70435 Stuttgart (DE)
(72) Erfinder: Bergler, Frank, D-75223 Niefern (DE); Käuffert, Uwe, D-75180 Pforzheim (DE)
(74) Vertreter: Knecht, Ulrich Karl

(57) **Zusammenfassung**

Schneller Datenaustausch zwischen einem Telekommunikationsendgerät (T) und einem Datenverarbeitungsgerät (PC) mit einem Schnittstellenschaltkreis (S) über den Signalisierungskanaldaten und Nutzkanaldaten im Zeitvielfachverfahren übertragen werden. Im Telekommunikationsendgerät erfolgt Zuordnung der Kanaldaten. Im Schnittstellenschaltkreis erfolgt Anpassung der Übertragungsparameter. Übertragung zu dem Datenverarbeitungsgerät erfolgt über eine spezielle Zwischenleitung (FAST-LINK) mit vorangestelltem speziellem Treiber (TSV).

## Beschreibung

Die Erfindung betrifft ein Verfahren, eine Vorrichtung und einen Schnittstellenschaltkreis zum schnellen Datenaustausch zwischen einem Telekommunikationsendgerät und einem Datenverarbeitungsgerät.

Ein bekanntes Verfahren zum Datenaustausch zwischen Telekommunikations- und Datenverarbeitungsanlage für den Fall, daß die Telekommunikationsanlage "lediglich Zubringerdienste" für die Datenverarbeitungsanlage leisten soll, erfolgt z.B. über die international standardisierte S2-Schnittstelle mit 2 MBit/s (PABX-Host-Kopplung; "Computer an der Telefonstrippe", Funkschau 16/1990, S. 55-58).

Ein weiteres bekanntes Verfahren besteht darin, Datenverarbeitungsgeräte mittels entsprechender Software in "Komfort"-Telefone umzuwandeln, so daß in einem Datenverarbeitungsgerät, beispielsweise einem Personal Computer, beide Geräte vereint sind. Für den Fall, daß ein zweiter Signalisierungskanal, ein sogenannter ISDN-B-Kanal frei ist, kann simultan zu einem Sprachdienst eine Datenverbindung zu einem anderen entsprechenden Datenverarbeitungsgerät aufgebaut werden, womit ein schneller Datentransfer gewährleistet wird (Erfahrungsbericht ISDN-Endgeräte; "PC als Komforttelefon und mehr", Funkschau 26/1989, S. 31-34).

Der Erfindung liegt die Aufgabe zugrunde, ein Verfahren, eine Vorrichtung und einen Schnittstellenschaltkreis zu entwickeln, welches bzw. welche einen schnellen Datenaustausch zwischen einem Telekommunikationsendgerät und einem Datenverarbeitungsgerät ermöglicht.

Die Aufgabe wird verfahrensgemäß gelöst durch die Lehre des Patentanspruchs 1 und vorrichtungsgemäß durch die Merkmale der Patentansprüche 8 und 9.

Ein Vorteil der Erfindung liegt darin, daß mit Hilfe des beanspruchten Verfahrens, der Vorrichtung und mit Hilfe des beanspruchten Schnittstellenschaltkreises ein hoher Datendurchsatz erreicht werden kann. Somit ist eine simultane Übertragung und Steuerung von mehreren Signalisierungskanälen und Nutzkanälen möglich. Das bedeutet aber auch, daß simultan sowohl Datenübertragung als auch Sprachübertragung stattfinden kann.

Ein weiterer Vorteil liegt speziell in der simultanen Übertragung von Daten und Sprache. Für den Fall, daß Daten zu oder von einem Datenverarbeitungsgerät aus übertragen werden, besteht immer noch die Möglichkeit der weiteren Benutzung des Telekommunikationsendgerätes. Dies ist zwingend notwendig, denn es ermöglicht, z.B. in einem Notfall, einem Benutzer trotz der gerade stattfindenen Datenübertragung, einen Notruf über ein Telekommunikationsendgerät, z.B. ein ISDN-Telefon, abzusetzen.

Vorteilhafte Weiterentwicklungen des Verfahrens sind den Unteransprüchen 2 bis 7 zu entnehmen. Vorteilhafte Weiterentwicklungen des Schnittstellenschaltkreises sind den Unteransprüchen 10 und 11 zu entnehmen.

In Unteranspruch 2 wird erläutert, wie und über welche Mittel die Übertragung zwischen Schnittstellenschaltkreis und Datenverarbeitungsgerät erfolgt, und zwar über eine Zwischenleitung mittels eines entsprechenden Treibers.

Nach Unteranspruch 3 wird sowohl dem Telekommunikationsendgerät als auch dem Datenverarbeitungsgerät beim Eintreffen ankommender Rufe oder Daten eine Verbindungsaufbau-Meldung, ein sogenanntes SET UP, übertragen. Beim Eintreffen des SET UP's wird ein Verbindungsaufbau eingeleitet, die Geräte sind also bereit für einen Empfang. Zusätzlich wird, vor der Bereitschaft für den Empfang, eine Versorgungsspannung für das Datenverarbeitungsgerät zugeschaltet, da diese für den Fall, daß keine Übertragung stattfindet, aus Wirtschaftlichkeitsgründen ausgeschaltet bleiben sollte und eine Zuschaltung nur für den Fall einer anstehenden Übertragung erfolgen sollte.

Nach Unteranspruch 4 wird das Datenverarbeitungsgerät so programmiert, daß bei einer Anmeldung zur Kommunikation, einem sogenannten ASSIGN, nur spezielle Rufe oder Daten weitergeleitet werden können. Diese Rufe oder Daten werden vorher festgelegt und programmiert, so daß nur für eine dieser speziellen Anmeldungen ein SET UP zu dem Datenverarbeitungsgerät übertragen wird, und für die restlichen Rufe oder Daten kein SET UP weitergeleitet wird.

Nach Unteranspruch 5 findet für den Fall, daß von dem Datenverarbeitungsgerät aus eine Verbindung über den Schnittstellenschaltkreis aufgebaut worden ist, direkt eine Übertragung von Signalisierungskanaldaten über die Verbindung (FAST-LINK) statt. Es findet folglich direkt eine schnelle Datenübertragung statt, ohne daß eine Verarbeitung der Signalisierungskanaldaten vorgenommen wird.

Nach Unteranspruch 6 findet eine Überprüfung eines Paßwortes und somit einer Zugangsberechtigung für den Fall statt, daß eine Verbindung (FAST-LINK) zu dem Datenverarbeitungsgerät hergestellt werden soll. Ein Rufender gibt eine Zahlenkombination über eine Tastatur ein, welche beispielsweise in Form von Mehrfrequenzsignalen an den Schnittstellenschaltkreis weitergegeben wird. Dort wird dieses Paßwort mit zugangsberechtigten Paßworten, welche in dem Schnittstellenschaltkreis programmiert und gespeichert sind, verglichen. Für den Fall der Übereinstimmung wird die Verbindung (FAST-LINK) zu dem Datenverarbeitungsgerät bereitgestellt und aufgebaut, und die Spannungsversorgung wird zugeschaltet.

Nach Unteranspruch 7 werden, für den Fall der Überprüfung des Paßwortes und der Zugangsberechtigung, die anstehenden Daten, die der Rufende übertragen möchte, zwischengespeichert und bei erfolgter Zugangsberechtigung übertragen.

Nach Unteranspruch 10 wird durch den Schnittstellenschaltkreis eine Anpassung einer Datenrate des Terminaladapters des Telekommunikationsendgerätes zu der seriellen Schnittstelle oder zu der parallelen Schnittstelle des Datenverarbeitungsgerätes vorgenommen.

Beispielsweise erfolgt für den Fall, daß das Telekommunikationsendgerät ein ISDN-Endgerät ist, so eine Anpassung von 64 KBd synchron des ISDN-Endgerätes an 115 kBd asynchron des Datenverarbeitungsgerätes. Weitere Konfigurationen sind ebenfalls ausführbar.

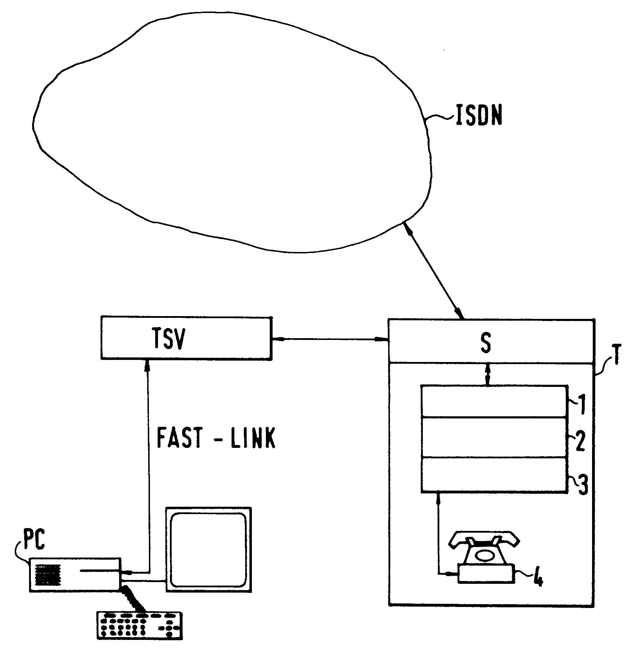

Nach Unteranspruch 11 kann der Schnittstellenschaltkreis in dem Telekommunikationsendgerät integriert sein oder als separate Vorrichtung, als sogenanntes Stand-Alone-Terminal, ausgeführt sein. Das erfindungsgemäße Verfahren, die erfindungsgemäße Vorrichtung und der erfindungsgemäße Schnittstellenschaltkreis werden anhand der Figur erläutert. Sie zeigt:
ein Blockschaltbild einer Vorrichtung nach Anspruch 7,
mittels der das Verfahren nach Anspruch 1 durchgeführt wird.

Im folgenden Teil wird das erfindungsgemäße Verfahren erläutert.

Über einen in einem Telekommunikationsendgerät T befindlichen Schnittstellenschaltkreis S, welcher mit einem Telekommunikationsnetz ISDN verbunden ist, werden sowohl Signalisierungskanaldaten als auch Nutzkanaldaten im Zeitvielfachverfahren gesendet. Weiterhin ist der Schnittstellenschaltkreis S mit einem Datenverarbeitungsgerät PC verbunden.

In dem aufgeführten Ausführungsbeispiel ist das Telekommunikationsendgerät T beispielsweise ein ISDN (Integrated-Services-Digital-Network)-Endgerät wie z.B. ein ISDN-Telefon. Entsprechend sind die Signalisierungskanaldaten ISDN-B-Kanaldaten und die Nutzkanaldaten entsprechen ISDN-D-Kanaldaten. Das Telekommunikationsnetz ist entsprechend ein ISDN-Netz.

Das ISDN-Endgerät T, beispielsweise das ISDN-Telefon, besitzt eine Schicht-3-Instanz 3, welche es mittels einer Kennzeichnung aller Signalisierungsaktivitäten, einer sogenannten Call-Referenz, ermöglicht zu unterscheiden, welchem der Geräte die ISDN-D-Kanaldaten zugeordnet werden. Weiterhin befindet sich in dem ISDN-Telefon eine Schicht-2-Instanz 2, eine Schicht-1-Instanz 1 und ein Bedienteil 4. Die Schicht-2-Instanz 2 ordnet einem der Geräte die ISDN-Kanaldaten zur Verarbeitung zu. Die Schicht-1-Instanz 1 stellt die Übertragung der Daten in den Kanälen in beiden Richtungen sicher. Das Bedienteil besteht beispielsweise aus einer Tastatur zur Eingabe von Zahlen und aus einem Hörer zur akustischen Ein- und Ausgabe.

Da die Geräte mit jeweils unterschiedlichen Datenraten arbeiten, muß zusätzlich eine Anpassung der unterschiedlichen Übertragungs- oder Bitraten in dem Schnittstellenschaltkreis S erfolgen. So wird beispielsweise eine Anpassung der Datenrate 64 kBd synchron des ISDN-Telefons zu 115 kBd asynchron des Datenverarbeitungsgerätes vorgenommen.

Für den Fall, daß Daten zu oder von dem Datenverarbeitungsgerät geschickt werden sollen, geschieht dies über eine spezielle Zwischenleitung FAST-LINK. Diese spezielle Zwischenleitung ermöglicht den schnellen Datenaustausch. Zur Übertragung von Daten über diese Zwischenleitung muß zusätzlich ein spezieller Treiber TSV für diese "schnelle'' Zwischenleitung FAST-LINK vorhanden sein und in Betrieb gesetzt werden.

Im folgenden Teil wird die erfindungsgemäße Vorrichtung erläutert.

Der erfindungsgemäße Schnittstellenschaltkreis befindet sich beispielsweise integriert in dem Telekommunikationsendgerät T. Zwischen dem Telekommunikationsnetz ISDN, und über die Zwischenleitung FAST-LINK und den Treiber TSV verbunden, zwischen dem Datenverarbeitungsgerät PC befindet sich der Schnittstellenschaltkreis. Speziell wird für die Anschlüsse bei dem Telekommunikationsendgerät ein Terminaladapter verwendet. Bei dem Datenverarbeitungsgerät kann beispielsweise die parallele Schnittstelle, z.B. die Druckerschnittstelle, oder aber die serielle Schnittstelle für die Anschlüsse der Zwischenleitung ausgewählt werden.

Als weitere Möglichkeit kann der Schnittstellenschaltkreis ebenso als sogenanntes ''Stand-Alone-Terminal'' außerhalb des Telekommunikationsengerätes ausgeführt werden.

Im folgenden Teil wird der erfindungsmäßige Schnittstellenschaltkreis S nach Anspruch 8 erläutert.

Auf dem Schnittstellenschaltkreis S befindet sich ein Prozessor, ein nicht flüchtiger Speicher und ein Mittel zum Schalten einer Versorgungsspannung für das Datenverarbeitungsgerät PC.

Der nicht flüchtige Speicher wird beispielsweise zum festen Abspeichern von Zugangsberechtigungsdaten verwendet. Das Mittel zum Schalten einer Versorgungsspannung besteht aus einer Elektronik, die erkennt, daß eine Verbindung zu dem Datenverarbeitungsgerät aufgebaut werden soll. In diesem Fall erfolgt eine Zuschaltung der Spannung zu dem Datenverarbeitungsgerät PC, und somit ist es betriebsbereit, d.h. bereit, Daten ein- oder auszulesen.

## Patentansprüche

1. Verfahren zum schnellen Datenaustausch zwischen einem Telekommunikationsendgerät (T) und einem Datenverarbeitungsgerät (PC), bei dem sowohl Signalisierungskanaldaten als auch Nutzkanaldaten im Zeitvielfachverfahren über einen im Telekommunikationsendgerät (T) befindlichen Schnittstellenschaltkreis (S) gesendet werden, wobei es im Telekommunikationsendgerät eine Schicht-3-Instanz (3) durch eine Kennzeichnung aller Nachrichten einer Signalisierungsaktivität (Call Referenz) ermöglicht zu unterscheiden, welchem der Geräte die Nutzkanaldaten zugeordnet werden sollen, und wobei eine Schicht-2-Instanz (2) die Kanaldaten dem Telekommunikationsendgerät (T) oder dem Datenverarbeitungsgerät (PC) zur Verarbeitung zuordnet, und wobei eine Anpassung von Übertragungsparametern in dem Schnittstellenschaltkreis (S) vorgenommen wird.

2. Verfahren nach Anspruch 1, bei dem für den Fall, daß Kanaldaten zu und/oder von dem Datenverarbeitungsgerät gesendet werden, dies mittels eines Treibers (TSV) über eine Zwischenleitung (FAST-LINK) zwischen Telekommunikationsendgerät (T) und Datenverarbeitungsgerät (PC) geschieht.

3. Verahren nach Anspruch 1 oder 2, bei dem sowohl dem Telekommunikationsendgerät (T) als auch dem Datenverarbeitungsgerät (PC) beim Eintreffen ankommender Rufe oder Daten eine Verbindungsaufbau-Meldung (SET UP) übertragen wird und eine Versorgungsspannung für das Datenverarbeitungsgerät zugeschaltet wird.

4. Verfahren nach Anspruch 1 oder 2, bei dem das Datenverarbeitungsgerät so programmiert wird, daß bei einer Anmeldung zur Kommunikation (ASSIGN) nur von festgelegten speziellen Anwendungen Verbindungsaufbau-Meldungen (SET UP) übertragen werden.

5. Verfahren nach einem der Ansprüche 1 bis 4, bei dem für den Fall, daß ein Verbindungsaufbau von dem Datenverarbeitungsgerät über den Schnittstellenschaltkreis (S) vorgenommen wird, Signalisierungskanaldaten direkt über die Zwischenleitung (FAST-LINK) übertragen werden.

6. Verfahren nach einem der Ansprüche 1 bis 5, bei dem für den Fall eines ankommenden Rufes von einem Rufenden ein Paßwort abgefragt und eine Zugangsberechtigung überprüft wird, indem das Paßwort in Form einer Zahlenkombination eingegeben wird, indem für die Überprüfung das Paßwort mit zugangsberechtigten Paßworten, die in den Schnittstellenschaltkreis (S) programmiert und gespeichert sind, verglichen wird und für den Fall einer Übereinstimmung eine Verbindung über die Zwischenleitung (FAST-LINK) zu dem Datenverarbeitungsgerät bereitgestellt und aufgebaut wird und die Spannungsversorgung für das Datenverarbeitungsgerät zugeschaltet wird.

7. Verfahren nach einem der Ansprüche 1 bis 6, bei dem für den Fall des Wartens auf Zugang zu dem Datenverarbeitungsgerät (PC) die bereits eintreffenden Kanaldaten zwischengespeichert werden.

8. Vorrichtung zum schnellen Datenaustausch zwischen einem Telekommunikationsendgerät (T) und einem Datenverarbeitungsgerät (PC), bei der sich eine Zwischenleitung (FAST-LINK) mit einem Treiber (TSV) zwischen einem Terminaladapter des Telekommunikationsendgerätes (T) und zwischen einer seriellen oder parallelen Schnittstelle des Datenverarbeitungsgerätes (PC) befindet, bei der sich ein Schnittstellenschaltkreis (S), eine Schicht-1-Instanz (1), eine Schicht-2-Instanz (2), eine Schicht-3-Instanz (3) und ein Bedienteil (4) in dem Telekommunikationsendgerät befindet, und bei der das Telekommunikationsendgerät (T) mit einem Telekommunikationsnetz (ISDN) verbunden ist.

9. Schnittstellenschaltkreis (S) zum schnellen Datenaustausch zwischen einem Telekommunikationsendgerät (T) und einem Datenverarbeitungsgerät (PC), der sich aus einem Prozessor, einem nicht flüchtigen Speicher und einem Mittel zum Schalten einer Versorgungsspannung zusammensetzt.

10. Schnittstellenschaltkreis (S) nach Anspruch 9, der eine Anpassung einer Datenrate des Terminaladapters des Telekommunikationsendgerätes (T) zu einer seriellen oder parallelen Schnittstelle des Datenverarbeitungsgerätes vornimmt.

11. Schnittstellenschaltkreis (S) nach einem der Ansprüche 9 oder 10, welcher in dem Telekommunikationsendgerät (T) integriert ist oder der als separate Vorrichtung ausgeführt ist.
